Europäisches Patentamt

European Patent Office

Office européen des brevets

(19)

(11) Numéro de publication : **0 474 552 A1**

(12) ## DEMANDE DE BREVET EUROPEEN

(21) Numéro de dépôt : **91402358.5**

(22) Date de dépôt : **03.09.91**

(51) Int. Cl.⁵ : **G03B 42/04**

(30) Priorité : **06.09.90 FR 9011088**

(43) Date de publication de la demande :
**11.03.92 Bulletin 92/11**

(84) Etats contractants désignés :
**DE NL**

(71) Demandeur : **GENERAL ELECTRIC CGR S.A.
100, rue Camille-Desmoulins
F-92130 Issy les Moulineaux (FR)**

(72) Inventeur : **Thirouard, Michel
Cabinet BALLOT-SCHMIT, 7 rue Le Sueur
F-75116 Paris (FR)**
Inventeur : **Tirelli, Marco
Cabinet BALLOT-SCHMIT, 7 rue Le Sueur
F-75116 Paris (FR)**

(74) Mandataire : **Ballot, Paul Denis Jacques et al
Cabinet Ballot 7, rue le Sueur
F-75116 Paris (FR)**

(54) **Système et dispositif d'impression d'informations sur films radiologiques.**

(57)    L'invention concerne les appareils de radiologie et, plus particulièrement, un système pour impressionner le film radiologique avec des informations d'identification alors que le film est encore en place sur l'appareil. L'invention réside dans le fait que le texte des informations est affiché sur l'écran d'un module d'affichage (26) et que la lumière émise par ledit écran est transmise vers le film radiologique (14) par un faisceau (27) de fibres optiques (28) dont le diamètre diminue progressivement pour s'adapter aux dimensions de la zone à impressionner. Le dispositif optique est mobile pour s'adapter à la position de ladite zone.

FIG. 5

EP 0 474 552 A1

Jouve, 18, rue Saint-Denis, 75001 PARIS

L'invention concerne les installations de radiologie et, plus particulièrement dans de telles installations, les systèmes et dispositifs qui permettent d'enregistrer sur le cliché radiologique des informations d'identification concernant ce cliché et la personne à laquelle il correspond.

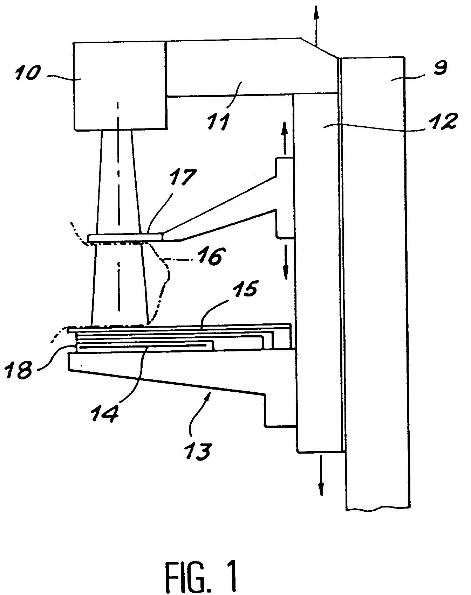

L'invention sera décrite dans son application à des systèmes de radiologie du type mammographe qui comprennent, comme le montre la figure 1, une source 10 de rayonnement X portée par une potence 11 disposée au sommet d'une plaque verticale 12. Cette dernière comporte un ensemble 13 sur lequel repose le sein 16 à examiner par l'intermédiaire d'une tablette horizontale 15. Une pelote 17, transparente au rayonnement X et mobile verticalement sur la plaque 12, sert à comprimer le sein.

Pour s'adapter à la taille de la patiente, la plaque 12 est montée sur une colonne verticale 9 reposant sur le sol et se déplace verticalement sur ladite colonne grâce à un dispositif mécanique approprié.

L'ensemble 13 présente, sur sa partie supérieure et sous la tablette 15, un tunnel dans lequel vient se loger une cassette 18 constituée d'une boîte noire renfermant un film 14 sensible au rayonnement X direct ou à un rayonnement photonique émis par un écran (non représenté) recevant le rayonnement X. C'est sur ce film 14 que se forme l'image latente du sein après une durée de pose appropriée; le développement du film donne un cliché radiographique.

D'une manière générale, il est important d'assurer, au fur et à mesure des examens radiologiques, le suivi de l'histoire médicale du patient et, à cet effet, l'identification des clichés est nécessaire : nom et âge du patient, date de l'examen, vue réalisée, nom du praticien, constantes radiologiques utilisées (haute tension, grandissement, dose), ces dernières n'étant connues qu'après l'examen et étant fournies par l'appareil radiologique...Ce suivi est encore plus important dans les examens préventifs, notamment en mammographie, où il est indispensable de déterminer l'évolution temporelle et spatiale des affections qui peuvent affliger l'organe radiographié.

Il existe de nombreux procédés d'identification des clichés qui consistent, de manière générale, à inscrire les informations ou indications souhaitées sur une portion du film radiologique non encore développé et hors de l'image de l'organe radiographié. Cette inscription est réalisée simultanément au cliché de l'organe, c'est le procédé direct, ou après la réalisation dudit cliché, c'est le procédé indirect.

Dans le procédé direct, un ensemble de caractères reproduisant les données à marquer sont placés dans le champ des rayons X et apparaissent donc sur une portion déterminée du cliché radiologique après développement. Ils peuvent apparaître en blanc sur fond noir (mode négatif) dans le cas où les caractères sont opaques au rayonnement X, c'est l'impression par absorption, ou en noir sur fond blanc (mode positif) dans le cas où les caractères sont transparents au rayonnement X, c'est l'impression par transmission.

Dans le procédé indirect, la portion du film radiologique, réservée aux informations, n'est pas impressionnée pendant l'examen, soit qu'elle se trouve en dehors du champ du rayonnement X, soit qu'elle est protégée par un masque opaque au rayonnement X si elle se trouve dans le champ du rayonnement X. Après la radiographie, la cassette, contenant le film radiologique non développé, est introduite dans un dispositif autonome, séparé de l'appareil radiologique, qui peut aussi faire partie intégrante du système de développement, pour l'impression des caractères. Cette impression peut être réalisée par un rayonnement X comme dans le procédé direct ou, le plus souvent, par un rayonnement lumineux dont la longueur d'onde est appropriée au film radiologique, c'est le cas des cassettes du type film-écran signalées ci-dessus.

Dans ce dernier cas, la cassette présente une fenêtre mobile en vis-à-vis de la zone masquée du côté opposé à celui de la source de rayonnement X. Le dispositif d'impression doit alors réaliser les opérations suivantes : étanchéité à la lumière dans la zone de la fenêtre, ouverture de la fenêtre, impression des données, fermeture de la fenêtre.

Dans les systèmes de développement avec marquage intégré, le film radiologique est ensuite retiré de la cassette pour être introduit dans le circuit de révélation et de fixation du cliché, à la sortie duquel ce dernier présente l'image de l'organe radiographié et les données d'identification.

Dans le cas où l'impression des données d'identification est réalisée avec la lumière, une carte sur laquelle est inscrite le texte souhaité est interposé entre la source de lumière et le film radiologique. Les caractères du texte sont soit écrits sur papier transparent pour obtenir des lettres blanches sur fond noir (mode négatif), soit écrits sous forme de perforation sur une carte opaque au rayonnement lumineux pour obtenir des lettres noires sur fond blanc (mode positif). Dans certains dispositifs de marquage, certaines données, en nombre restreint, telles que la date et/ou l'heure, sont inscrites à partir d'un dispositif analogue à celui d'une montre digitale.

Les procédés d'impression de données d'identification de films radiologiques qui viennent d'être décrits succinctement ont chacun leurs avantages et inconvénients et le choix entre l'un ou l'autre procédé résulte d'un compromis qui tient compte notamment du type d'examen radiologique, du type de film radiologique et de la place disponible pour enregistrer les données d'identification.

Ainsi, dans le cas de la mammographie, le film radiologique étant sensible au rayonnement lumineux c'est le procédé d'impression des caractères du texte par la lumière qui est habituellement choisi. Mais la longueur de ce texte est limité car la zone du film qui lui est réservée est petite. En outre, comme cette zone est plus petite que la carte contenant le texte, il faut prévoir un dispositif optique approprié pour projeter le texte inscrit ou perforé sur ladite zone du film.

Par ailleurs, les faibles dimensions de cette zone d'impression ne permettent pas l'utilisation directe sans adaptation de modules d'affichage du type à cristaux liquides ou autres.

Enfin, les dimensions de la zone d'impression et celles de la fenêtre et sa position précise sur le film ou par rapport au plan de la cassette ne sont pas normalisées et varient donc d'un fabricant à l'autre, de sorte que chaque fabricant propose son propre dispositif d'impression quine peut pas être intégré à l'appareil de radiologie sans introduire des modifications importantes, soit pour le mettre en place, soit pour recueillir les paramètres radiologiques de l'appareil de radiologie.

Un but de la présente invention est donc de réaliser un système et un dispositif d'impression d'informations sur un film radiologique du type sensible à la lumière qui sont adaptables aux différentes cassettes des fabricants.

Un autre but de l'invention est aussi de réaliser un tel système et un tel dispositif d'impression en mettant en oeuvre des modules d'affichage lumineux du type programmable et à commande par calculateur.

Encore un autre but de l'invention est un système et un dispositif d'impression qui permettent l'enregistrement d'informations lorsque le patient est encore en place sur l'appareil de radiologie tel qu'un mammographe.

L'invention concerne un système d'impression d'informations sur un film radiologique sensible à la lumière qui est disposé dans une cassette, ledit film comportant une zone pour l'impression d'informations qui est protégée du rayonnement X par un masque porté par la cassette et qui est accessible pour l'impression par une fenêtre fermée par un volet mobile également porté par la cassette, ledit système étant caractérisé par le fait qu'il comprend un dispositif optique mobile coopérant avec la fenêtre et le volet de ladite cassette et comportant au moins un module d'affichage lumineux, des moyens motorisés pour déplacer ledit dispositif optique suivant trois axes orthogonaux, et un ordinateur pour commander, d'une part, ledit module d'affichage pour qu'il affiche les informations à transférer sur ladite zone du film radiologique et, d'autre part, les moyens motorisés pour que la face de sortie dudit dispositif optique vienne au contact du film radiologique en vue de son impression.

Afin d'adapter les dimensions de l'écran du module d'affichage à celles de la zone à impressionner, la lumière émise par l'écran dudit module est transmise vers ladite zone par l'intermédiaire d'un faisceau de fibres optiques dont le diamètre de la face de sortie qui vient en contact avec le film radiologique est plus petit que celui de la face d'entrée de la lumière provenant dudit module d'affichage.

Les moyens motorisés pour déplacer le dispositif optique permettent le positionnement précis de la face de sortie du faisceau de fibres par rapport à la zone du film radiologique à impressionner de manière à s'adapter aux différents types de cassettes utilisées.

D'autres caractéristiques et avantages de la présente invention apparaîtront à, la lecture de la description suivante d'un exemple particulier de réalisation, ladite description étant faite en relation avec les dessins joints dans lesquels :
– la figure 1 est une vue en coupe verticale simplifiée d'un mammographe qui utilise des cassettes auxquelles s'applique le dispositif selon l'invention,
– la figure 2 est un schéma de principe d'un système d'impression d'informations sur film radiologique selon l'invention,
– la figure 3 est une vue en coupe du dispositif optique du système selon l'invention et,
– la figure 4 est une vue en perspective cavalière montrant le faisceau de fibres optiques utilisé dans le dispositif optique selon l'invention, et
– la figure 5 est une vue en coupe et en perspective cavalière du dispositif optique monté sur les moyens de déplacement solidaire de la tablette de support de la cassette.

Le système et le dispositif d'impression d'informations sur un film radiologique selon l'invention seront décrits dans son application à un mammographe du type de celui de la figure 1 mais il peut être mis en oeuvre avec tout autre type d'appareil radiologique utilisant des cassettes ou en association avec un dispositif de développement des films radiologiques.

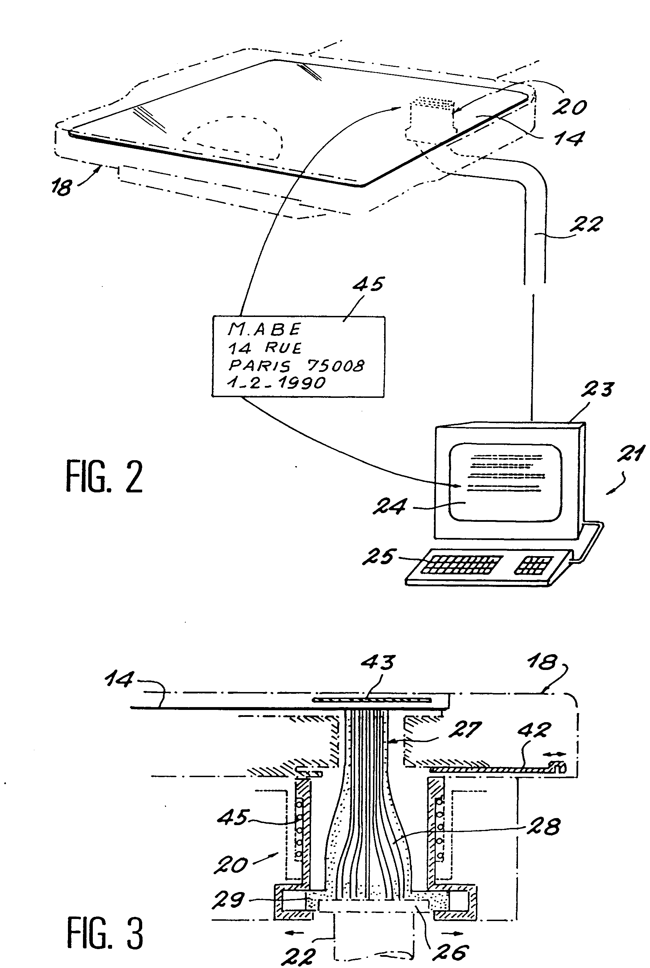

Le système comprend un dispositif optique 20 (figure 2), un pupitre de commande 21 et un câble électrique de liaison 22. Le pupitre de commande du système est en fait celui de l'installation radiologique tel qu'un mammographe dont fait partie le système selon l'invention et il comprend notamment un ordinateur 23 avec un écran 24 et un clavier 25.

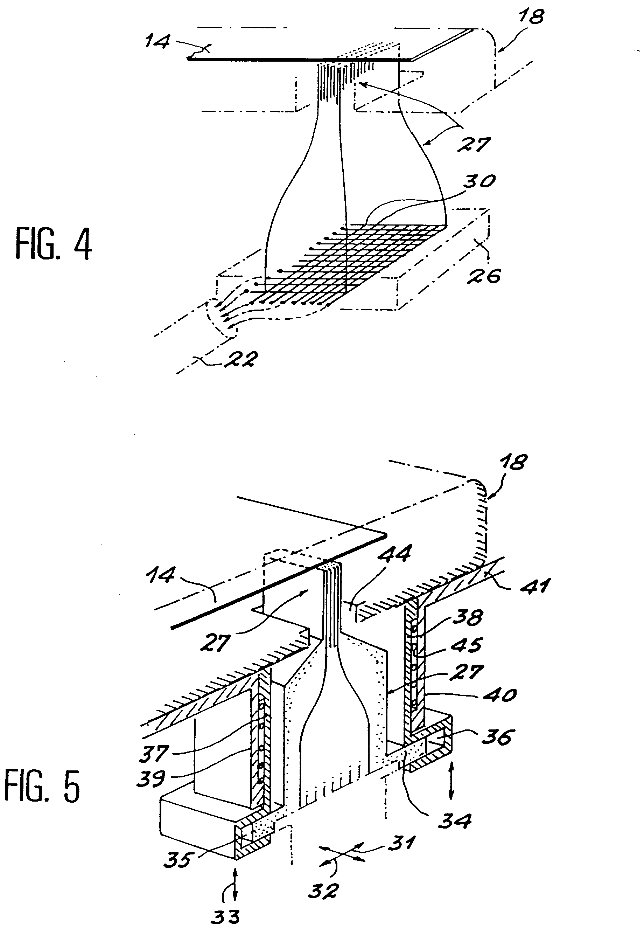

Le dispositif optique 20 comprend (figures 3,4 et 5) un module d'affichage 26 et un faisceau 27 de fibres optiques 28 qui sont maintenues sur un même support 29 dans une relation géométrique fixe. Le module d'affichage 26 est de tous types connus et notamment celui fabriqué par la société ISE ELECTRONICS CORPORATION et vendu sous la marque ITRON par la société NORITAKE EUROPA GmbH. Un tel module d'affichage comprend, non seulement l'écran d'affichage du type fluorescent, mais aussi le circuit de commande des points lumineux élémentaires ou pixels pour générer les caractères. C'est ce circuit de commande qui est connecté par le câble de liaison 22 au pupitre de commande 21.

Par exemple, chaque caractère est créé à l'aide d'une matrice élémentaire de 16 pixels par 16 pixels, l'écran comportant autant de matrices élémentaires que de nombre maximum de caractères à créer. L'écran comprend donc des matrices élémentaires arrangés en lignes et colonnes et chaque matrice élémentaire étant elle-même organisée en lignes et colonnes de pixels référencés 30.

Le faisceau 27 de fibres optiques 28 a pour but de transmettre la lumière provenant, par exemple, d'une matrice élémentaire et donc d'un caractère, vers le film radiologique à impressionner mais avec réduction de la taille du caractère par réduction des dimensions de la fibre optique 28. Cette réduction peut être dans le rapport de 2 à 1. On obtient ainsi un faisceau de fibres dont l'extrémité du côté film radiologique (face de sortie du faisceau) a une superficie nettement moindre que celle de l'écran d'affichage et qui est adaptée à la superficie utile de la zone à impressionner.

La face de sortie du faisceau de fibres optiques a une superficie qui est adaptée à celle de la zone utile du film radiologique quel que soit le type de cassette. Bien entendu, il est possible d'associer une fibre optique à chaque pixel ou à un groupe de pixels et de réduire le diamètre de ladite fibre au fur et à mesure de l'éloignement du pixel ou du groupe de pixels.

Le dispositif optique 20 est prévu de manière à être étanche à la lumière et à permettre des déplacements dans le plan horizontal (flèches doubles 31 et 32) et dans le sens vertical (flèche double 33).

Pour obtenir ces effets, le module d'affichage 26 est supporté par un cadre extérieur 34 dont les prolongements latéraux s'emboîtent dans des rainures ou glissières 35 et 36 dans lesquelles ils peuvent coulisser suivant les directions indiquées par les flèches doubles 31 et 32. Les rainures 35 et 36 sont montées chacune respectivement à l'extrémité de bras 37 et 38 qui coulissent verticalement (flèche double 33) dans des glissières (non représentées) portées par des flancs 39 et 40 qui sont solidaires de la paroi supérieure 41 du plateau 13 sur laquelle repose la cassette 18.

Les glissières horizontales 35 et 36 sont prévues pour permettre des amplitudes suffisantes des mouvements horizontaux afin de s'adapter à la position de la zone utile d'impression sur le film radiologique. Les glissières verticales sont prévues pour permettre l'escamotage du dispositif optique dans le plateau 13 lors de la mise en place de la cassette 18 et son positionnement du plus près du film radiologique 14 pour l'impression, de préférence au contact de ce dernier. Un ressort 45, travaillant en compression, est disposé entre les flancs 39,40 et les bras 37,38 pour ramener la face de sortie du faisceau optique 27 vers le film radiologique 14.

Les déplacements verticaux du dispositif optique sont combinés avec les déplacements d'ouverture et de fermeture d'un volet 42 qui obture la fenêtre d'accès à la zone utile du film radiologique 14 après mise en place de la cassette 18.

Les différents déplacements du dispositif optique sont obtenus par des micro-moteurs (non représentés) qui sont commandés par l'ordinateur 23 en fonction du type de cassette utilisé.

Le mode opératoire et le fonctionnement du système d'impression sur film radiologique sont alors les suivants. A l'aide du clavier 25, le praticien indique les informations à enregistrer telles que les nom, prénom et date de naissance du patient, le type de vue radiologique, les caractéristiques opératives de l'appareil radiologique, la date de l'examen. Lorsque ces informations sont prêtes à l'enregistrement, la cassette est mise en place sur le plateau 13 et le praticien indique par le clavier à l'ordinateur le type de cette cassette, ce qui permet à l'ordinateur de déterminer les déplacements horizontaux et verticaux du dispositif optique en fonction des caractéristiques de la cassette préalablement enregistrées. L'ordinateur envoie alors sur le câble 22 des signaux de commande appropriés des micro-moteurs pour que la face de sortie du faisceau 27 de fibres optiques vienne en contact du film radiologique 14 après ouverture du volet 42 et à la meilleure position dans la zone utile réservée à l'impression des données. Lorsque le dispositif optique est en place, le praticien peut commander l'impression des informations écrites sur l'écran 24 par affichage sur l'écran du module 26. Le rectangle 45 de la figure 2 montre un exemple d'informations qui peuvent être inscrites sur le film radiologique par l'intermédiaire système et du dispositif selon l'invention.

L'invention a été décrite avec un faisceau 27 de fibres optiques 28 entre le module d'affichage 26 et le film qui est de faible longueur et qui est rigide. Cependant, l'invention est également applicable au cas où ce faisceau 27 de fibres est plus long, ce qui permet de placer le module d'affichage 26 à un autre endroit que sur la tablette 13, par exemple sur la colonne 12 (figure 1). Dans ce cas, le dispositif de support 29 n'est prévu que pour maintenir et déplacer l'extrémité du faisceau de fibres, c'est-à-dire la face de sortie. En outre, le faisceau (27) de fibres doit être souple pour s'adapter aux positions relatives de la colonne 12 et de la tablette 13 et sa face de sortie doit être maintenue par l'intermédiaire d'un dispositif qui est semblable au dispositif 20 mais quine comprendra pas le module d'affichage 26.

**Revendications**

1. Système d'impression d'informations sur un film radiologique (14) sensible à la lumière qui est disposé dans une cassette (18), ledit film (14) comportant une zone pour l'impression d'informations qui est protégée du rayonnement X par un masque (43) porté par la cassette (18) et qui est accessible pour l'impression par une fenêtre fermée par un volet mobile (42) également porté par la cassette, ledit système étant caractérisé par le fait qu'il comprend un dispositif optique (20) mobile coopérant avec la fenêtre et le volet (42) de ladite cassette (18), et comportant au moins un module d'affichage lumineux, des moyens motorisés pour déplacer ledit dispositif optique suivant trois axes orthogonaux, et un ordinateur pour commander, d'une part, ledit module d'affichage (26) pour qu'il affiche les informations à transférer sur le film (14) et, d'autre part, les moyens motorisés pour que la face de la sortie du dispositif optique (20) vienne en contact avec le film radiologique (14) en vue de son impression avec des informations affichées sur ledit module d'affichage (26).

2. Système selon la revendication 1 caractérisé en ce que le dispositif optique comprend, en outre, un faisceau (27) de fibres optiques (28) dont la face d'entrée capte la lumière émise par l'écran du module d'affichage et dont la face de sortie, de superficie inférieure à la face d'entrée, est prévue pour venir au contact dudit film radiologique (14).

3. Système selon la revendication 1 ou 2, dans son application à un appareil de mammographie qui comporte une tablette de support (13) de la cassette (18), caractérisé en ce que le dispositif optique (20) et les moyens motorisés sont disposés dans la tablette de support (13) de la cassette (18), ladite tablette (13) comportant un orifice pour le passage du dispositif optique en direction du film radiologique (14) de la cassette (18) ou pour l'escamoter en vue de permettre la mise en place de ladite cassette (18).

4. Système selon la revendication 3, caractérisé en ce que le faisceau (27) de fibres optiques (28) est solidaire du module d'affichage (26) par l'intermédiaire d'un cadre (34) et que ledit cadre (34) présente des prolongements latéraux qui coulissent horizontalement dans des glissières (35,36), lesdites glissières (35,36) étant portées par des bras (37,38) qui coulissent verticalement par rapport à des flancs verticaux (39,40) solidaires de la tablette de support (13) de la cassette (18).

5. Système selon l'une des revendications précédentes dans le cas où l'écran du module d'affichage (26) est du type à matrice de pixels (30), caractérisé en ce que chaque fibre otique (28) du faisceau (27) est associée à un pixel dudit écran et présente un diamètre qui diminue progressivement entre la face d'entrée près de l'écran et la face de sortie près du film radiologique.

6. Système selon l'une des revendications précédentes, dans le cas où l'écran du module d'affichage (26) est du type à matrice de pixels (30), caractérisé en ce que chaque fibre optique (28) de faisceau (27) est associé à un groupe de pixels dudit écran et présente un diamètre qui diminue progressivement entre la face d'entrée près de l'écran et la face de sortie près du film radiologique.

FIG. 1

FIG. 2

M.ABE
14 RUE
PARIS 75008
1-2-1990

45

20

14

18

22

23

21

24

25

FIG. 3

14

43

18

27

42

45

20

28

29

22

26

7

FIG. 4

FIG. 5

EP 0 474 552 A1

Office européen des brevets

**RAPPORT DE RECHERCHE EUROPEENNE**

Numero de la demande

EP 91 40 2358

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 906 377 (DE OUDE DELFT)<br>* Revendications 1,3,4,8; figures 2,3b,4a *<br>--- | 1,2,5 | G 03 B 42/04 |
| A | EP-A-0 336 836 (ICONOS)<br>* Abrégé; figures 1,3 *<br>--- | 1,3 | |
| A | DE-A-3 633 289 (SIEMENS)<br>* Colonne 3, lignes 46-53; figure 2 *<br>--- | 1 | |
| A | FR-A-1 470 037 (MENARD)<br>* Revendication 1; figure 2 *<br>--- | 1 | |
| A | US-A-4 797 691 (AKIYOSHI et al.)<br>* Abrégé; figure 4 *<br>----- | 1,2,5,6 | |
| | | | **DOMAINES TECHNIQUES RECHERCHES (Int. Cl.5)**<br><br>G 03 B |

Le présent rapport a été établi pour toutes les revendications

| Lieu de la recherche | Date d'achèvement de la recherche | Examinateur |
|---|---|---|
| LA HAYE | 09-10-1991 | ROMEO V.L.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)

9